# FASCICULE DE BREVET EUROPEEN

(11) **EP 4 062 081 B1**
(45) Date de publication et mention de la délivrance du brevet: **05.11.2025**
(21) Numéro de dépôt: 20793403.5
(22) Date de dépôt: 27.10.2020
(51) Int. Cl.: F16D 25/0638, B60K 6/387, F16D 25/10, F16D 25/12, F16D 21/06

(54) **MOYEU D'ALIMENTATION D'HUILE ASSEMBLÉ ET TRIPLE EMBRAYAGE HUMIDE COMPRENANT CE MOYEU D'ALIMENTATION D'HUILE ASSEMBLÉ**
MONTIERTE ÖLZUFUHRNABE UND DREIFACHE NASSKUPPLUNG MIT DIESER MONTIERTEN ÖLZUFUHRNABE
ASSEMBLED OIL-SUPPLY HUB, AND TRIPLE WET CLUTCH COMPRISING THIS ASSEMBLED OIL-SUPPLY HUB

(30) Priorité: 19.11.2019 FR 1912911
(43) Date de publication de la demande: 28.09.2022
(73) Titulaire: VALEO EMBRAYAGES, 80009 Amiens (FR)
(72) Inventeur: DOLE, Arnaud, 95892 Cergy Pontoise (FR); DEQUESNES, Laurent, 95892 Cergy Pontoise (FR); DOREMUS, Olivier, 95892 Cergy Pontoise (FR); VUAROQUEAUX, Guillaume, 95892 Cergy Pontoise (FR); CAUMARTIN, Laurent, 95892 Cergy Pontoise (FR); THIBAUT, François, 95892 Cergy Pontoise (FR); WACQUIER, Jean-Luc, 95892 Cergy Pontoise (FR)
(74) Mandataire: Valeo Powertrain Systems
(86) Numéro de dépôt international: PCT/EP2020/080100
(87) Numéro de publication internationale: WO 2021/099070

(56) Documents cités:
- CN-A- 109 322 940
- JP-A- 2015 214 988
- RU-C1- 2 670 340

## Description

La présente invention concerne un moyeu d'alimentation d'huile assemblé et un triple embrayage humide comprenant ce moyeu d'alimentation d'huile assemblé.

La présente invention se rapporte au domaine des chaines de transmission de couple pour véhicules automobiles, notamment disposées entre un moteur thermique et une boîte de vitesses.

L'invention concerne plus précisément un triple embrayage humide pour un véhicule automobile de type hybride dans lequel une machine électrique tournante est disposée dans la chaine de transmission de couple.

Dans l'état de la technique, il est connu des véhicules automobiles de type hybride comprenant un mécanisme à double embrayage humide disposé entre un moteur à combustion interne et une boîte de vitesses, une machine électrique tournante ainsi qu'un embrayage de coupure et un organe d'actionnement de cet embrayage de coupure permettant d'accoupler ou désaccoupler en rotation un vilebrequin du moteur à combustion interne à un rotor de la machine électrique tournante. Ainsi, il est possible de couper le moteur à combustion interne à chaque arrêt du véhicule et de le redémarrer grâce à la machine électrique tournante. La machine électrique tournante peut également constituer un frein électrique ou apporter un surplus d'énergie au moteur à combustion interne pour l'assister ou éviter que celui-ci ne cale. Lorsque le moteur à combustion interne est en fonctionnement, la machine électrique peut jouer le rôle d'un alternateur. La machine électrique tournante peut également assurer l'entraînement du véhicule indépendamment du moteur à combustion interne.

Une telle machine électrique tournante peut être en ligne avec le mécanisme à double embrayage humide, c'est-à-dire que l'axe de rotation du rotor de la machine électrique tournante est confondu avec l'axe de rotation des embrayages comme décrit dans le document EP 2 517 915. En variante, la machine électrique tournante peut être déportée par rapport au mécanisme à double embrayage humide, c'est-à-dire que l'axe de rotation du rotor de la machine électrique tournante est décalé de l'axe de rotation du mécanisme à double embrayage humide.

Dans les développements actuels d'hybridation (« hybridisation » en anglais) des véhicules automobiles, il est demandé de disposer de chaîne de transmission de couple intégrant une source d'énergie électrique sans toutefois que cela n'impacte la compacité axiale de ladite chaîne de transmission. Du fait de la présence d'embrayage de type humide, il a fallu concevoir un triple embrayage humide permettant d'alimenter en fluide les différents embrayages sans modifier l'encombrement de la chaine de transmission de couple. Cette recherche de compacité axiale est à la base de l'invention.

L'architecture d'un triple embrayage humide doit être de plus en plus compacte et il est parfois difficile de loger tous les composants. Ainsi, du fait de la présence de la machine électrique tournante, il est nécessaire du positionner l'embrayage de coupure et son piston d'actionnement dans un espace situé du côté du moteur thermique et le mécanisme à double embrayage humide dans un autre espace situé du côté de la boite de vitesses, ce qui pose un certain nombre de problèmes et notamment l'alimentation en fluide de l'embrayage et de son organe d'actionnement. Dans le document EP 2 517 915, les canaux d'alimentation d'huile sont disposés au travers d'un flasque central s'étendant radialement et qui sépare les deux espaces réservés à l'embrayage de coupure et au mécanisme à double embrayage humide. Les canaux d'alimentation d'huile sont complexes à fabriquer. Cette architecture de triple embrayage humide est également très encombrante axialement. [O'autres triples embrayages humides sont connus des documents JP2015214988A et CN109322940 A.]

L'invention vise à améliorer la conception existante en bénéficiant d'un triple embrayage humide permettant de concilier les exigences de compacité axiale tout en garantissant une bonne alimentation des embrayages et de leurs pistons d'actionnement en fluide.

Dans ce but, l'invention propose, selon l'un de ses aspects, un moyeu d'alimentation d'huile assemblé pour triple embrayage humide comportant un moyeu central d'axe de rotation X, ledit moyeu central comprenant :
- une portion cylindrique,
- un flasque s'étendant radialement depuis la portion cylindrique,
- une première cavité annulaire disposée sur le côté du flasque et agencée pour recevoir un piston d'actionnement d'un premier embrayage,
- une deuxième cavité annulaire disposée sur le même côté du flasque que la première cavité annulaire et agencée pour recevoir un piston d'actionnement d'un deuxième embrayage,
- une troisième cavité annulaire disposée radialement au-delà des deux autres cavités annulaires et agencée pour recevoir un piston d'actionnement d'un embrayage de coupure additionnel, et
au moins un canal d'alimentation d'huile formé dans le moyeu central traversant la portion cylindrique et/ou le flasque, et débouchant dans l'une des cavités annulaires ledit moyeu d'alimentation d'huile assemblé comprenant une pièce annulaire rapportée sur le flasque du moyeu central, ladite pièce annulaire rapportée formant en partie la première cavité annulaire et/ou la deuxième cavité annulaire [, la pièce annulaire rapportée est un porte-disques d'entrée du premier embrayage et/ou du deuxième embrayage, l'extrémité libre de la pièce annulaire rapportée comportant une cannelure et l'autre extrémité étant fixée sur le flasque].

Grace à cette architecture de moyeu d'alimentation d'huile assemblé, les cavités annulaires associées aux embrayages sont concentriques et disposées radialement dans un même plan. Les canaux d'alimentation d'huile pour les différentes cavités sont agencés selon un même plan passant au travers du flasque facilitant ainsi leurs intégrations au sein du triple embrayage humide et leurs réalisations. L'encombrement axial d'un tel moyeu d'alimentation d'huile assemblé est ainsi réduit.

Ce moyeu d'alimentation d'huile assemblé, selon l'invention, présente l'avantage, grâce à l'emploi d'une pièce annulaire rapportée de réduire les couts de fabrication. Cette pièce annulaire rapportée permet de former des cavités annulaires à moindre cout, comparativement à une opération d'usinage, étant donné que celle-ci peut être formée par exemple par emboutissage. Cette pièce annulaire rapportée peut également remplir d'autres fonctions au sein du triple embrayage humide telle que servir de porte-disque ou encore supporter des ressorts hélicoïdaux.

Selon un mode de réalisation, le moyeu d'alimentation d'huile assemblé peut comprendre un couvercle d'entrainement agencé pour être entrainé en rotation par une machine électrique, le couvercle d'entrainement formant en partie la troisième cavité annulaire.

De préférence, le couvercle d'entrainement peut être rapporté sur le pourtour extérieur du flasque du moyeu central. On simplifie de cette manière les formes du moyeu central et la matière du couvercle d'entraînement peut être choisie différemment de celle du moyeu central.

Avantageusement, le couvercle d'entrainement peut entourer le pourtour extérieur du flasque. Il est ainsi possible de disposer les cavités annulaires associées aux trois embrayages radialement dans un même plan.

De préférence, les canaux d'alimentation d'huile peuvent déboucher sur le pourtour extérieur du flasque et peuvent être refermés par le couvercle d'entrainement. De cette manière, il est possible de rendre étanche une partie des canaux d'alimentation d'huile sans utiliser d'autres composants onéreux.

L'invention peut présenter l'une ou l'autre des caractéristiques décrites ci-dessous combinées entre elles ou prises indépendamment les unes des autres :
- les canaux d'alimentation d'huile peuvent être répartis angulairement autour de la portion cylindrique ;
- la pièce annulaire rapportée peut comprendre au moins une portée cylindrique intérieure et/ou extérieure pour l'appui d'un joint d'étanchéité de piston d'actionnement ;
- la pièce annulaire rapportée peut former la cavité annulaire de l'un des premier ou deuxième embrayages et comprend une portée cylindrique intérieure et une portée cylindrique extérieure pour l'appui des joints d'étanchéité d'un même piston d'actionnement ;
- la pièce annulaire rapportée peut comprendre une portée cylindrique intérieure et une portée cylindrique extérieure pour l'appui des joints d'étanchéité des pistons d'actionnement du premier embrayage et du deuxième embrayage ;
- la pièce annulaire rapportée peut comprendre une portée cylindrique intérieure et une portée cylindrique extérieure pour l'appui des joints d'étanchéité des pistons d'actionnement de l'embrayage de coupure et du premier embrayage ;
- la pièce annulaire rapportée peut présenter en section dans un plan passant par l'axe X la forme d'un U ;
- la portion cylindrique peut comprendre une portée cylindrique externe formant en partie la deuxième cavité annulaire du deuxième embrayage.
- la pièce annulaire rapportée peut être fixée par soudage sur le flasque du moyeu central, par exemple par soudage laser ou par soudage laser par transparence, le cordon de soudure étant disposé radialement au-dessus et/ou en dessous de l'orifice de sortie du canal d'alimentation d'huile débouchant dans la cavité annulaire.
- la pièce annulaire rapportée peut être fixée par rivetage sur le flasque du moyeu central.
- la pièce annulaire rapportée peut être une plaque annulaire d'un des éléments de rappel élastique du premier embrayage ou de l'embrayage de coupure, l'extrémité libre de la pièce annulaire rapportée comportant une face en appui sur des ressorts hélicoïdaux et l'autre extrémité étant fixée sur le flasque.
- les cavités annulaires de l'embrayage de coupure, du premier embrayage et du deuxième embrayage peuvent se succéder radialement en rapprochement de l'axe X.
- la pièce annulaire rapportée peut comprendre au moins un orifice formant en partie le canal d'alimentation d'huile de la cavité annulaire.

Un tel moyeu d'alimentation d'huile assemblé, selon l'une ou l'autre des caractéristiques décrites ci-dessus combinées entre elles ou prises indépendamment les unes des autres, présente l'avantage, grâce à l'emploi d'une pièce annulaire rapportée de réduire les couts de fabrication. Cette pièce annulaire rapportée permet de former des cavités annulaires à moindre cout, comparativement à une opération d'usinage, étant donné que celle-ci peut être formée par exemple par emboutissage. Cette pièce annulaire rapportée peut également remplir d'autres fonctions au sein du triple embrayage humide telle que servir de porte-disques ou encore supporter des ressorts hélicoïdaux. L'encombrement axial d'un tel moyeu d'alimentation d'huile assemblé est ainsi réduit.

L'invention a également pour objet, selon un autre de ses aspects, un triple embrayage humide pour système de transmission de couple comprenant :
un embrayage de coupure de type multidisques, commandé pour accoupler sélectivement un arbre menant à une machine électrique,
un premier embrayage et un deuxième embrayage respectivement de type multidisques, commandés pour accoupler sélectivement la machine électrique et/ou l'arbre menant à un premier arbre mené et à un deuxième arbre mené,
les premier et deuxième embrayages étant disposés radialement l'un au-dessus de l'autre,
le triple embrayage humide étant remarquable en ce qu'il comprend un moyeu d'alimentation d'huile assemblé reprenant tout ou partie des caractéristiques mentionnées précédemment, ledit moyeu d'alimentation d'huile assemblé alimentant en huile les chambres de commande de l'embrayage de coupure, du premier embrayage et du deuxième embrayage.

Grace à cette architecture de triple embrayage humide, les embrayages sont concentriques et disposés radialement dans un même plan. L'encombrement axial d'un tel triple embrayage humide au sein d'un système de transmission de couple ou d'une chaine de transmission de couple est ainsi réduit.

De préférence, le premier embrayage peut être actionné à l'aide d'un premier piston d'actionnement, mobile axialement par rapport à la première cavité annulaire du moyeu central entre une position embrayée et une position débrayée du premier embrayage, le premier piston d'actionnement étant commandé en déplacement au moyen d'une chambre de commande délimitée en partie par la pièce annulaire rapportée. De cette manière, la chambre de commande du premier embrayage est incluse dans la première cavité, l'alimentation en huile sous pression se faisant ainsi au plus près du moyeu d'alimentation d'huile assemblé réduisant ainsi les fuites au sein du triple embrayage humide.

De préférence, le deuxième embrayage peut être actionné à l'aide d'un deuxième piston d'actionnement, mobile axialement par rapport à la deuxième cavité annulaire du moyeu central entre une position embrayée et une position débrayée du deuxième embrayage, le deuxième piston d'actionnement étant commandé en déplacement au moyen d'une chambre de commande délimitée en partie par la pièce annulaire rapportée. De cette manière, la chambre de commande du deuxième embrayage est incluse dans la deuxième cavité, l'alimentation en huile sous pression se faisant ainsi au plus près du moyeu d'alimentation d'huile assemblé réduisant ainsi les fuites au sein du triple embrayage humide.

Selon un mode de réalisation, les pistons d'actionnement sont annulaires et peuvent comprendre des joints toriques rapportés.

Selon un autre mode de réalisation, les pistons d'actionnement sont annulaires et peuvent comprendre des joints d'étanchéité surmoulés.

Avantageusement, l'ensemble multidisques du premier embrayage peut être disposé radialement entre la première cavité et la troisième cavité du moyeu d'alimentation d'huile assemblé. De cette manière, il est possible d'exploiter l'espace intérieur disponible au sein du triple embrayage humide et ainsi réduire l'encombrement axial.

Avantageusement, l'ensemble multidisques du deuxième embrayage peut être disposé radialement entre la première cavité et la deuxième cavité du moyeu d'alimentation d'huile assemblé. De cette manière, il est possible d'exploiter l'espace intérieur disponible au sein du triple embrayage humide et ainsi réduire l'encombrement axial.

De préférence, l'ensemble multidisques du premier embrayage peut être actionné par un premier organe de transmission de force, le premier organe de transmission de force étant une pièce en tôle emboutie en appui sur le piston d'actionnement du premier embrayage.

Selon un mode de réalisation, l'extrémité libre du piston d'actionnement du deuxième embrayage en appui sur l'ensemble multidisques est disposée radialement entre la première cavité et la deuxième cavité. De cette manière, il est possible d'exploiter l'espace intérieur disponible au sein du triple embrayage humide et ainsi réduire l'encombrement axial.

De préférence, les trois cavités annulaires de l'embrayage de coupure, du premier embrayage et du deuxième embrayage peuvent être orientées dans une même direction axiale, notamment en direction de l'arbre menant.

Selon un mode de réalisation, le canal d'alimentation d'huile peut être réalisé par perçage de conduites successives au sein du moyeu d'alimentation d'huile assemblé, lesdites conduites étant débouchantes les unes dans les autres et agencées pour alimenter en fluide sous pression la chambre de commande des embrayages.

Selon un mode de réalisation, le fluide peut être de l'huile, par exemple de l'huile de boîte de vitesses.

Selon un mode de réalisation, le triple embrayage humide peut comprendre en outre un embrayage de coupure en rotation autour de l'axe X, accouplant sélectivement et par friction un élément d'entrée, lié en rotation à un arbre menant, à un moyeu d'alimentation d'huile assemblé apte à être couplé en rotation à un premier arbre mené de boite de vitesses ou un deuxième arbre mené de boite de vitesses.

Selon un mode de réalisation, le triple embrayage humide peut comprendre en outre un premier embrayage et un deuxième embrayage respectivement de type multidisques, commandés pour accoupler sélectivement la machine électrique et/ou l'arbre menant à un premier arbre mené de boite de vitesses et à un deuxième arbre mené de boite de vitesses par l'intermédiaire du moyeu d'alimentation d'huile assemblé.

De préférence, l'embrayage de coupure peut être celui situé radialement à l'extérieur, c'est-à-dire le plus loin de l'axe de rotation X du triple embrayage humide. Le deuxième embrayage peut être celui situé radialement à l'intérieur, c'est-à-dire le plus proche de l'axe de rotation X du triple embrayage humide.

Selon un aspect de l'invention, le piston d'actionnement de chaque embrayage peut être contrôlé par un capteur interne de position venant contrôler l'embrayage ou par mesure de la pression hydraulique lors de la fermeture de l'embrayage ou par mesure du volume de fluide injecté ou par mesure d'une grandeur de déplacement lors de la fermeture de l'embrayage.

Selon un mode de réalisation, le couvercle d'entrainement comprend une zone de connexion électrique apte à être lié en rotation avec une machine électrique tournante autour d'un axe parallèle à l'axe de rotation X.

De préférence, le couvercle d'entrainement peut comprendre une cannelure agencée pour recevoir l'ensemble multidisques de l'embrayage de coupure, ladite cannelure étant issue de matière avec le couvercle d'entrainement ou rapportée sur le couvercle d'entrainement.

Avantageusement, le couvercle d'entrainement peut comprendre une couronne dentée apte à être liée en rotation avec une machine électrique tournante autour d'un axe parallèle à l'axe de rotation X.

Selon un aspect de l'invention, la zone de connexion électrique est décalée axialement de l'embrayage de coupure et/ou des premier et deuxième embrayages. La machine électrique est alors dite « off-line ».

Cette disposition permet de positionner la machine électrique en fonction de l'espace disponible dans la chaine de transmission de couple du véhicule. Cette disposition permet notamment de ne pas avoir à disposer la machine électrique axialement à la suite des embrayages, ce qui serait négatif pour la compacité axiale. Cette disposition permet notamment de ne pas avoir à disposer la machine électrique radialement au-delà des embrayages, ce qui serait négatif pour la compacité radiale.

De manière alternative, une chaine ou une courroie peut être utilisée pour relier la machine électrique tournante à la zone de connexion électrique.

En variante, on peut prévoir que le couvercle d'entrainement définit un support de rotor d'une machine électrique en rotation autour de l'axe de rotation. La machine électrique est alors dite « in-line ».

De préférence, le couvercle d'entrainement peut comprendre une zone de connexion électrique apte à être liée en rotation avec une machine électrique tournante autour d'un axe concentrique à l'axe de rotation X.

Avantageusement, la zone de connexion électrique du couvercle d'entrainement agencée pour recevoir un rotor de moteur électrique concentrique à l'axe X peut être décalée axialement par rapport au premier embrayage et au deuxième embrayage.

Cette disposition permet notamment de disposer la machine électrique radialement au niveau des embrayages, ce qui permet d'améliorer la compacité radiale.

Selon l'invention, les embrayages, à savoir l'embrayage de coupure, le premier embrayage et le deuxième embrayage peuvent être de type multidisques. Dans le cadre de l'invention, un ensemble multidisques est un ensemble comprenant au moins un disque de friction solidaire en rotation de l'un des porte-disque d'entrée et de sortie, au moins deux plateaux respectivement disposés de part et d'autre de chaque disque de friction, solidaires en rotation de l'autre des porte-disque d'entrée et de sortie et des garnitures de friction disposées entre les plateaux et un disque de friction, les embrayages décrivant une position débrayée et une position embrayée dans laquelle lesdits plateaux et le disque de friction pincent les garnitures de friction de manière à transmettre un couple entre un porte-disque d'entrée et un porte-disque de sortie.

Au sens de la présente demande, un embrayage humide est un embrayage qui est adapté pour fonctionner dans un bain d'huile.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux figures annexées.
- la [Figure 1] représente une vue en coupe axiale d'un triple embrayage humide selon un premier mode de réalisation de l'invention.
- la [Figure 2] représente une vue isométrique d'un triple embrayage humide selon le premier mode de réalisation de l'invention de la [Figure 1].
- la [Figure 3] représente une vue en coupe axiale d'un triple embrayage humide selon un deuxième mode de réalisation de l'invention.

Dans la suite de la description et des revendications, on utilisera à titre non limitatif et afin d'en faciliter la compréhension, les termes " avant " ou " arrière " selon la direction par rapport à une orientation axiale déterminée par l'axe X principal de rotation de la transmission du véhicule automobile et les termes " intérieur / interne " ou " extérieur / externe " par rapport à l'axe O et suivant une orientation radiale, orthogonale à ladite orientation axiale.

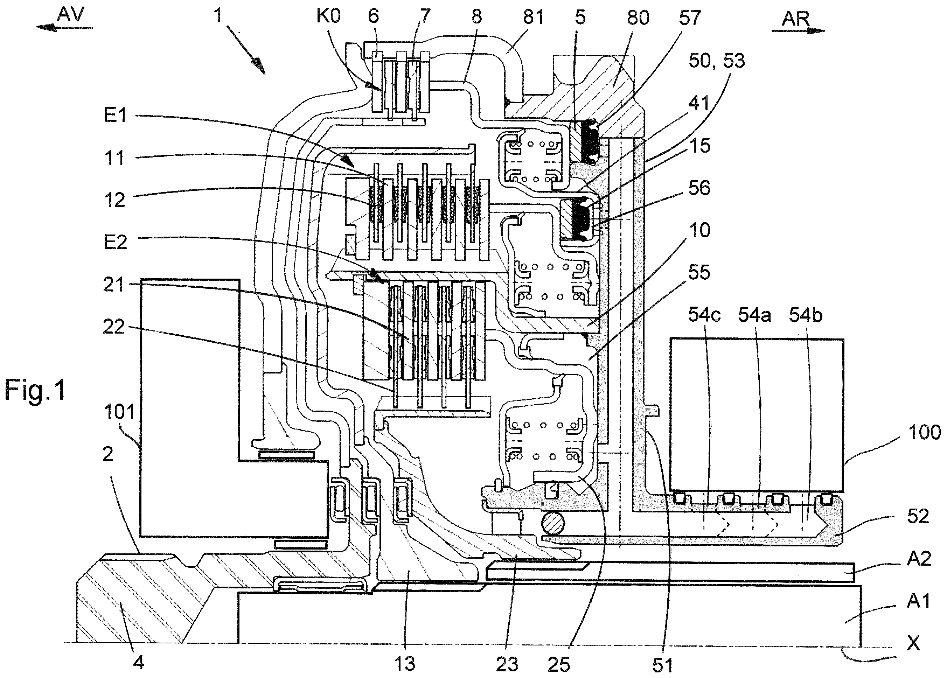

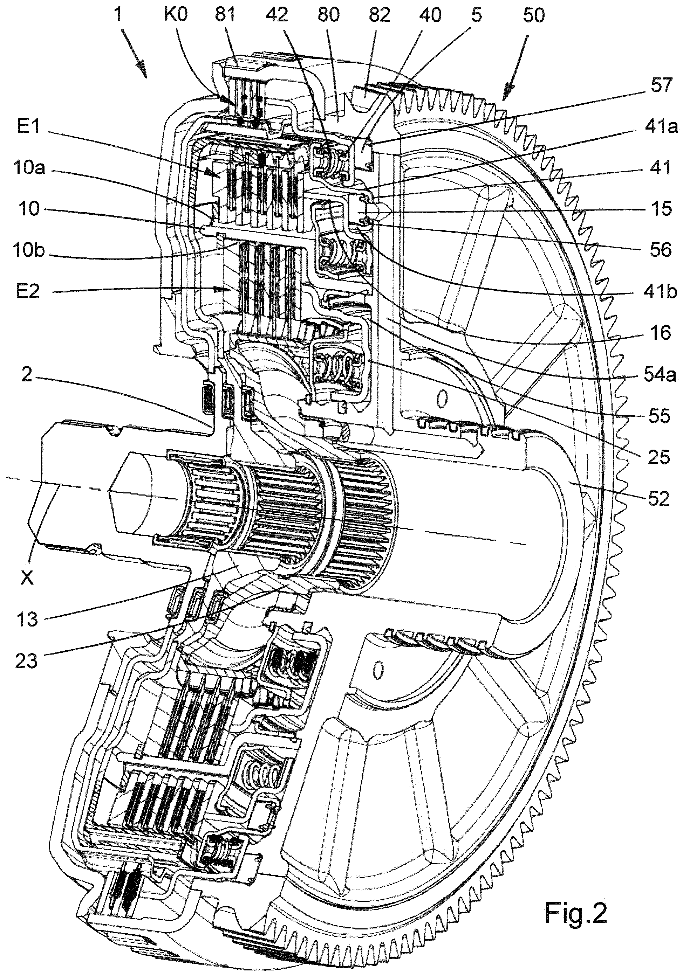

On a représenté sur les figures 1 et 2 un premier mode de réalisation d'un moyeu d'alimentation d'huile assemblé 50 pour triple embrayage humide 1. Le triple embrayage humide 1 est représenté au sein d'une chaine de transmission de couple de véhicule automobile par l'intermédiaire d'un carter de boite de vitesses 100 équipé de deux arbres A1, A2 menés de sortie de couple.
En relation avec les figures 1 et 2, on observe un triple embrayage humide 1 comprenant :
- un embrayage de coupure K0 de type multidisques, commandé pour accoupler sélectivement un arbre menant à une machine électrique,
- un premier embrayage E1 de sortie de couple et un deuxième embrayage E2 de sortie de couple respectivement de type multidisques, commandés pour accoupler sélectivement la machine électrique et/ou l'arbre menant à un premier arbre mené et à un deuxième arbre mené, les premier et deuxième embrayages E1, E2 étant disposés radialement l'un au-dessus de l'autre, et
- un moyeu d'alimentation d'huile assemblé 50 au sens de la présente invention, ledit moyeu d'alimentation d'huile assemblé 50 alimentant en huile les chambres de commande de l'embrayage de coupure K0, du premier embrayage E1 et du deuxième embrayage E2.

Le moyeu d'alimentation d'huile assemblé 50 comporte un moyeu central 51 d'axe de rotation X, ledit moyeu central 51 comprenant :
- une portion cylindrique 52,
- un flasque 53 s'étendant radialement depuis la portion cylindrique 52,
- une première cavité 56 annulaire disposée sur le côté du flasque et agencée pour recevoir un piston d'actionnement du premier embrayage E1,
- une deuxième cavité 55 annulaire disposée sur le même côté du flasque que la première cavité annulaire et agencée pour recevoir un piston d'actionnement du deuxième embrayage E2,
- une troisième cavité 57 annulaire disposée radialement au-delà des deux autres cavités annulaires et agencée pour recevoir un piston d'actionnement de l'embrayage de coupure K0 additionnel, et
- des canaux d'alimentation d'huile 54a, 54b et 54c formés dans le moyeu central 51 traversant la portion cylindrique 52 et le flasque 51, et débouchant séparément dans les cavités annulaires.

Les cavités 57, 56, 55 annulaires de l'embrayage de coupure K0, du premier embrayage E1 et du deuxième embrayage E2 sont orientées dans une même direction, par exemple en direction de l'arbre menant, c'est-à-dire en direction du moteur thermique de la chaine de transmission de couple.

Le triple embrayage humide 1 comporte autour de son axe de rotation X au moins un élément d'entrée 2 de couple qui est lié en rotation à un arbre menant (non représenté). L'élément d'entrée 2 est situé à l'avant du triple embrayage humide 1.

Dans le premier mode de réalisation, l'élément d'entrée 2 présentant globalement une forme en « L », comporte une partie d'orientation radiale formée par un voile 3 d'entrée de couple et une partie d'orientation axiale formée par un moyeu 4 d'entrée de couple. Le voile 3 et le moyeu 4 sont solidaires, de préférence fixés ensemble par soudage. Le moyeu 4 d'entrée de couple est guidé en rotation à l'intérieur d'un boitier 101 fixe par rapport à la chaine de transmission de couple.

Le moyeu 4 d'entrée de couple est par exemple lié en rotation par l'intermédiaire de cannelures formées à la sortie d'un dispositif d'amortissement (tel qu'un double volant amortisseur, etc.) dont l'entrée est liée, par l'intermédiaire notamment d'un volant moteur, à l'arbre menant formé par un vilebrequin qu'entraîne en rotation un moteur thermique équipant le véhicule automobile.

Le voile 3 d'entrée de couple comporte, à son extrémité radiale externe une cannelure agencée pour recevoir l'ensemble multidisques de l'embrayage de coupure K0.

Dans l'exemple considéré, le triple embrayage humide 1 comprend en outre un embrayage de coupure K0 accouplant sélectivement et par friction le voile 3 d'entrée de couple et un porte-disque de sortie 81 de l'embrayage de coupure K0 solidaire en rotation avec le moyeu d'alimentation d'huile assemblé 50.

Le porte-disque 81 de sortie est dans ce premier mode de réalisation rapporté sur un couvercle d'entrainement 80 lui-même fixé au moyeu d'alimentation d'huile assemblé 50.

L'embrayage de coupure K0 comprend un ensemble multidisque comprenant plusieurs disques 7 de friction, équipés de garnitures de friction, solidaires en rotation du voile 3 d'entrée de couple, plusieurs plateaux 6 respectivement disposés de part et d'autre de chaque disque 7 de friction, solidaires en rotation du porte-disque de sortie 81, l'embrayage de coupure K0 décrivant une position débrayée et une position embrayée dans laquelle lesdits plateaux 6 et les disques 7 de friction pincent les garnitures de friction de manière à transmettre un couple entre le voile 3 d'entrée de couple et le porte-disque de sortie 81.

Les plateaux 6 de l'ensemble multidisques de l'embrayage de coupure K0 sont liés en rotation au moyeu d'alimentation d'huile assemblé 50 par l'intermédiaire d'une cannelure et les disques 7 de friction liés en rotation à l'élément d'entrée 2.

Le moyeu d'alimentation d'huile assemblé 50 comprend un couvercle d'entrainement 80 rapporté sur le pourtour extérieur du flasque 53 du moyeu central 51. Le moyeu d'alimentation d'huile assemblé 50 a pour fonction de transmettre le couple au sein du triple embrayage humide 1. Pour cela, le couvercle d'entrainement 80 est solidaire en rotation avec le porte-disque de sortie 81, dans le cas présent par l'intermédiaire d'une liaison soudée.

En variante, le couvercle d'entrainement 80 peut comprendre une cannelure agencée pour recevoir l'ensemble multidisques de l'embrayage de coupure K0, ladite cannelure étant issue de matière avec le couvercle d'entrainement ou rapportée sur le couvercle d'entrainement.

Le couvercle d'entrainement 80 comprend une zone de connexion électrique 82 apte à être lié en rotation avec une machine électrique tournante. Dans le cas présent, la machine électrique tourne autour d'un axe parallèle à l'axe de rotation X. La machine électrique est dite « off-line » car elle n'est pas concentrique à l'arbre de transmission mais alignée selon un arbre parallèle. La zone de connexion électrique 82 est apte à coopérer directement avec un pignon de la machine électrique tournante.

La zone de connexion électrique 82 peut être réalisée sous la forme d'une couronne apte à être engrenée directement par un pignon ou indirectement (courroie, chaine...) de la machine électrique tournante (non visible). La couronne peut présenter une denture hélicoïdale de forme complémentaire au pignon de la machine électrique tournante.

Le moyeu d'alimentation d'huile assemblé 50 est apte à transmettre le couple en provenance de deux sources distinctes, thermique et électrique. Lorsque l'embrayage de coupure K0 est fermé, le couple issu du moteur thermique peut alors être transmis aux arbres coaxiaux A1, A2 de boite de vitesses en fonction de la fermeture de l'un ou de l'autre du premier embrayage E1 ou du deuxième embrayage E2.

Le premier arbre A1 mené est entraîné en rotation lorsque ledit premier embrayage E1 est fermé et le deuxième A2 arbre mené est entraîné en rotation lorsque ledit deuxième embrayage E2 est fermé.

L'ensemble multidisques du premier embrayage E1 comporte des plateaux 11 liés en rotation à un porte-disque 10 rapporté sur le moyeu d'alimentation d'huile assemblé 50 et des disques 12 de friction liés en rotation à un porte-disque de sortie 13. Les disques 12 de friction sont, unitairement, axialement interposés entre deux plateaux 11 successifs.

Le porte-disque de sortie 13 du premier embrayage E1 est lié en rotation par engrènement avec les disques 12 de friction et par une liaison cannelée avec ledit premier arbre A1 mené. L'extrémité radiale intérieure du porte-disque de sortie 13 est solidarisée à un moyeu de sortie cannelé.

L'ensemble multidisques du deuxième embrayage E2 comporte des plateaux 21 liés en rotation au porte-disque 10 rapporté sur le moyeu d'alimentation d'huile assemblé 50 et des disques 22 de friction liés en rotation à un porte-disque de sortie 23.

Le porte-disque de sortie 23 du deuxième embrayage E2 est lié en rotation par engrènement avec les disques 22 de friction et par une liaison cannelée avec ledit deuxième arbre A2 mené. L'extrémité radiale intérieure du porte-disque de sortie 23 est solidarisée à un moyeu de sortie cannelé.

Dans le cas présent, le porte-disque 10 comporte une cannelure externe 10a qui engrène avec l'ensemble multidisques du premier embrayage E1 et une cannelure interne 10b qui engrène avec l'ensemble multidisques du deuxième embrayage E2. Le porte-disque 10 est fixé solidement au moyeu central 51 par l'intermédiaire d'un cordon de soudure.

En variante non représentée, les cannelures interne et externe engrenant avec les ensembles multidisques des embrayages E1 et E2 peuvent être réparties sur deux porte-disques distincts rapportés sur le moyeu d'alimentation d'huile assemblé.

Le triple embrayage humide 1 est commandé hydrauliquement par l'intermédiaire d'un fluide sous pression, généralement de l'huile.

Pour commander sélectivement le changement d'état de l'embrayage de coupure K0, du premier embrayage E1 et du deuxième embrayage E2, un dispositif de commande du triple embrayage humide gère l'alimentation en huile sous pression au sein de chambres de commande séparées. Le dispositif de commande est généralement intégré au carter de boite de vitesses 100. Le dispositif de commande est raccordé au moyeu d'alimentation d'huile 50 qui comporte des canaux 54a, 54b et 54c d'alimentation d'huile sous pression, par exemple au nombre de trois tel que représenté sur la figure 1. Les canaux d'alimentation d'huile 54a, 54b et 54c sont répartis angulairement autour de la portion cylindrique 52 du moyeu central 51.

Chacun des canaux 54a, 54b et 54c d'alimentation d'huile sont constitués de perçages sensiblement radiaux et axiaux dirigés en direction des chambres de commande de l'embrayage de coupure K0, des premier et deuxième embrayages E1, E2.

Par exemple, le canal d'alimentation d'huile 54b situé axialement à l'extrémité arrière du moyeu d'alimentation d'huile 50 est associé à la chambre de commande du deuxième embrayage E2. Le canal d'alimentation d'huile 54b est réalisé par perçage de conduites successives axiales et radiales au sein du moyeu d'alimentation d'huile assemblé 50. Les conduites sont débouchantes les unes dans les autres et agencées pour alimenter en fluide sous pression la chambre de commande du deuxième embrayage E2. Le canal d'alimentation d'huile 54b débouche dans la deuxième cavité 55 annulaire formée en partie par la portion cylindrique 52 du moyeu central 51 et en partie par une pièce rapporté annulaire. Dans le cas présent, la pièce annulaire rapportée sur le flasque du moyeu central 51 est une partie du porte-disque 10 du deuxième embrayage E2. Le porte-disque 10 et la pièce annulaire rapportée de la deuxième cavité 55 forme une seule est même pièce.

Le deuxième embrayage E2 comporte un piston d'actionnement 25 qui est mobile axialement, ici de l'arrière vers l'avant, entre une position débrayée et une position embrayée qui correspondent respectivement aux états ouvert et fermé du deuxième embrayage E2. L'ensemble multidisques du deuxième embrayage E2 est actionné directement par le deuxième piston d'actionnement 25 réalisée à partir d'une tôle emboutie. Le piston d'actionnement 25 est mobile axialement par rapport à la deuxième cavité 55 annulaire du moyeu central 51. Le piston d'actionnement 25 est commandé en déplacement au moyen d'une chambre de commande délimitée en partie par la pièce annulaire rapportée 10.

Le canal d'alimentation d'huile 54a usiné dans le moyeu d'alimentation d'huile 50 est associé à la chambre de commande du premier embrayage E1. Le canal d'alimentation d'huile 54a est réalisé par perçage de conduites successives axiales et radiales au sein du moyeu d'alimentation d'huile assemblé 50. Les conduites sont débouchantes les unes dans les autres et agencées pour alimenter en fluide sous pression la chambre de commande du premier embrayage E1. Le canal d'alimentation d'huile 54b débouche dans la première cavité 56 annulaire formée par une pièce rapporté annulaire 41 présentant en section dans un plan passant par l'axe X la forme d'un U.

Dans le cas présent, la pièce annulaire rapportée 41 formant la première cavité 56 comprend une portée cylindrique intérieure 41a et une portée cylindrique extérieure 41b pour l'appui des joints d'étanchéité du premier piston d'actionnement 15 du premier embrayage E1. La pièce annulaire rapportée 41 est la plaque annulaire d'un élément de rappel élastique 40 de l'embrayage de coupure K0. L'extrémité libre de la pièce annulaire rapportée 41 comporte une face en appui sur des ressorts hélicoïdaux 42 et l'autre extrémité est fixée sur le flasque 53. La pièce annulaire rapportée 41 de la première cavité 56 est fixée solidement au moyeu central 51 par l'intermédiaire de cordons de soudure concentriques. Les cordons de soudure assurent l'étanchéité de la chambre de commande du premier piston d'actionnement 15. La pièce annulaire rapportée 41 comprend un orifice formant en partie le canal d'alimentation d'huile 54a de la cavité 56 annulaire permettant l'entrée de l'huile au sein de la chambre de commande.

Le piston d'actionnement 15 du premier embrayage E1 est mobile axialement, ici de l'arrière vers l'avant, entre une position débrayée et une position embrayée qui correspondent respectivement aux états ouvert et fermé du premier embrayage E1. L'ensemble multidisques du premier embrayage E1 est actionné par un premier organe de transmission de force 16, le premier organe de transmission de force 16 étant une pièce en tôle emboutie en appui sur le premier piston d'actionnement 15.

Comme illustré sur la figure 1, l'élément de rappel élastique 40 du piston d'actionnement 5 de l'embrayage de coupure K0 comprend une pluralité de ressorts hélicoïdaux 42 intercalés axialement entre une paroi avant de la pièce annulaire rapportée 41 et le piston d'actionnement 5 de l'embrayage de coupure K0. L'élément de rappel élastique 40 a pour fonction de rappeler automatiquement le piston d'actionnement 5 en position débrayée, correspondant à un état ouvert de l'embrayage. Le piston d'actionnement 5 est annulaire et comprend des joints d'étanchéité surmoulés.

Le canal d'alimentation d'huile 54c usiné dans le moyeu d'alimentation d'huile 50 est associé à la chambre de commande de l'embrayage de coupure K0. Le canal d'alimentation d'huile 54c est réalisé par perçage de conduites successives axiales et radiales au sein du moyeu d'alimentation d'huile assemblé 50. Les conduites sont débouchantes les unes dans les autres et agencées pour alimenter en fluide sous

Le piston d'actionnement 5 de l'embrayage de coupure K0 est mobile axialement, ici de l'arrière vers l'avant, entre une position débrayée et une position embrayée qui correspondent respectivement aux états ouvert et fermé de l'embrayage de coupure K0. L'ensemble multidisques de l'embrayage de coupure K0 est actionné par un organe de transmission de force 8, l'organe de transmission de force 8 étant une pièce en tôle emboutie en appui sur le piston d'actionnement 5. L'organe de transmission de force 8 reçoit l'appui des ressorts hélicoïdaux 42 de l'élément de rappel élastique 40.

Dans le premier mode de réalisation, les canaux d'alimentation d'huile 54a, 54b et 54c débouchent sur le pourtour extérieur du flasque 53 et sont refermés par le couvercle d'entrainement 80.

Comme cela est connu dans le fonctionnement d'un embrayage humide, une chambre d'équilibrage est associée à chaque chambre de commande. Les chambres d'équilibrage sont alimentées en fluide de refroidissement. Le fluide de refroidissement empreinte des canaux distincts des canaux d'alimentation d'huile 54a, 54b et 54c. Ces canaux distincts sont également formés dans le moyeu d'alimentation d'huile assemblé 50.

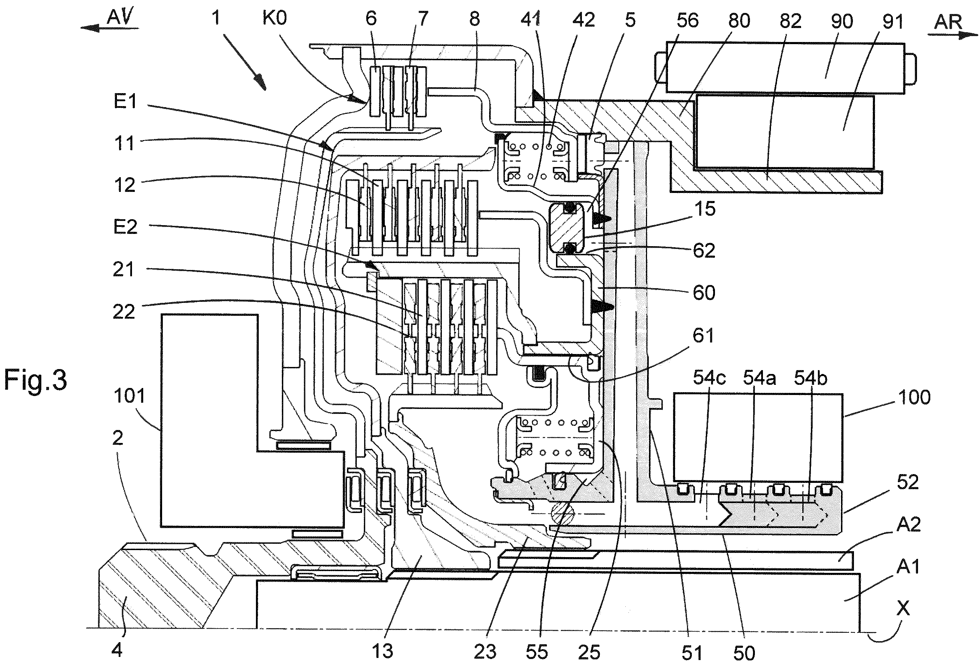

La figure 3 présente un [ exemple de ]triple embrayage humide 1 semblable au premier mode au moins dans son fonctionnement général.

Ce [ triple embrayage humide] diffère de celui exposé en référence aux figures 1 et 2 en ce que le couvercle d'entrainement 80 comprend une zone de connexion électrique 82 liée en rotation avec une machine électrique 90 tournante concentrique à l'axe de rotation X. La machine électrique est alors dite « in-line ».

Le rotor 91 de la machine électrique 90 est solidaire en rotation du couvercle d'entrainement 80. Dans le cas présent, la zone de connexion électrique 82 et le rotor 91 sont décalés axialement par rapport au premier embrayage E1 et au deuxième embrayage E2 de sorte que la compacité radiale du triple embrayage humide est améliorée.

Ce [ triple embrayage humide] diffère également de celui exposé en référence aux figures 1 et 2 en ce qu'une pièce annulaire rapportée 60 comprend une portée cylindrique intérieure 61 pour l'appui du joint d'étanchéité du piston d'actionnement 25 du deuxième embrayage E2 et une portée cylindrique extérieure 62 pour l'appui du joint d'étanchéité du piston d'actionnement 15 du premier embrayage E1. Le piston d'actionnement 15 est annulaire et comprend des joints toriques rapportés.

Avantageusement, l'extrémité libre du piston d'actionnement 25 du deuxième embrayage E2 en appui sur l'ensemble multidisques est disposée radialement entre la première cavité 56 et la deuxième cavité 55. De cette manière, il est possible d'exploiter l'espace intérieur disponible au sein du triple embrayage humide et ainsi réduire l'encombrement axial.

Avantageusement, l'ensemble multidisques du deuxième embrayage E2 est disposé radialement entre la première cavité 56 et la deuxième cavité 55. De cette manière, il est possible d'exploiter l'espace intérieur disponible au sein du triple embrayage humide et ainsi réduire l'encombrement axial.

La pièce annulaire rapportée 60 est fixée sur le flasque 53 du moyeu central 51 par un procédé de soudure, par exemple de la soudure laser par transparence ou de la soudure par décharge de condensateur. La pièce annulaire rapportée 60 forme en partie la première cavité 56 annulaire et la deuxième cavité 55 annulaire.

La pièce annulaire rapportée 60 présente en section dans un plan passant par l'axe X la forme d'un U et peut facilement être réalisée par emboutissage d'une tôle d'acier. En variante, la pièce annulaire rapportée 60 pourrait être usinée.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

On comprend à la lecture de ce qui précède que la présente invention propose un triple embrayage humide dans lequel les embrayages sont concentriques et disposées radialement dans un même plan. L'encombrement axial d'un tel triple embrayage humide au sein d'une chaine de transmission de couple est réduit. Ce triple embrayage humide comprenant un moyeu d'alimentation d'huile assemblé dans lequel le réseau de canaux d'alimentation d'huile est plus simple à concevoir et demande moins de temps à fabriquer.

L'invention ne saurait toutefois se limiter aux moyens et configurations décrits et illustrés ici, et elle s'étend également à tout moyen ou configuration équivalents et à toute combinaison technique opérant de tels moyens. En particulier, la forme du moyeu d'alimentation d'huile assemblé peut être modifiée sans nuire à l'invention, dans la mesure où ces composants, in fine, remplissent les mêmes fonctionnalités que celles décrites dans ce document

Dans les revendications, tout signe de référence entre parenthèses ne saurait être interprété comme une limitation de revendication.

## Revendications

1. Moyeu d'alimentation d'huile assemblé (50) pour triple embrayage humide comportant un moyeu central (51) d'axe de rotation (X), ledit moyeu central (51) comprenant :
une portion cylindrique (52),
un flasque (53) s'étendant radialement depuis la portion cylindrique (52),
une première cavité (56) annulaire disposée sur le côté du flasque et agencée pour recevoir un piston d'actionnement (15) d'un premier embrayage (E1),
une deuxième cavité (55) annulaire disposée sur le même côté du flasque que la première cavité (56) annulaire et agencée pour recevoir un piston d'actionnement (25) d'un deuxième embrayage (E2),
une troisième cavité (57) annulaire disposée radialement au-delà des deux autres cavités (55, 56) annulaires et agencée pour recevoir un piston d'actionnement (5) d'un embrayage de coupure (K0) additionnel, et
au moins un canal d'alimentation d'huile (54a, 54b, 54c) formé dans le moyeu central (51) traversant la portion cylindrique (52) et/ou le flasque (53), et débouchant dans l'une des cavités (55, 56, 57) annulaires,
ledit moyeu d'alimentation d'huile assemblé (50) comprenant une pièce annulaire rapportée (10, 41, 60) sur le flasque du moyeu central, ladite pièce annulaire rapportée formant en partie la première cavité (56) annulaire et/ou la deuxième cavité (55) annulaire,
**caractérisé en ce que** la pièce annulaire rapportée (10) est un porte-disque d'entrée du premier embrayage (E1) et/ou du deuxième embrayage (E2), l'extrémité libre de la pièce annulaire rapportée (10) comportant une cannelure et l'autre extrémité étant fixée sur le flasque (53).

2. Moyeu d'alimentation d'huile assemblé (50) selon la revendication 1, **caractérisé en ce qu'**il comprend un couvercle d'entrainement (80) agencé pour être entrainé en rotation par une machine électrique, le couvercle d'entrainement (80) formant en partie la troisième cavité (57) annulaire.

3. Moyeu d'alimentation d'huile assemblé (50) selon la revendication 2, **caractérisé en ce que** le couvercle d'entrainement (80) est rapporté sur le pourtour extérieur du flasque (53) du moyeu central (51).

4. Moyeu d'alimentation d'huile assemblé (50) selon l'une des revendications 1 à 3, **caractérisé en ce que** la portion cylindrique (52) comprend une portée cylindrique externe formant en partie la deuxième cavité (55) annulaire du deuxième embrayage (E2).

5. Moyeu d'alimentation d'huile assemblé (50) selon l'une des revendications 1 à 4, **caractérisé en ce que** la pièce annulaire rapportée (10, 41, 60) est fixée par soudage sur le flasque du moyeu central, par exemple par soudure laser, le cordon de soudure étant disposé radialement au-dessus et/ou en dessous de l'orifice de sortie du canal d'alimentation d'huile (54a, 54b, 54c) débouchant dans la cavité (55, 56, 57) annulaire.

6. Moyeu d'alimentation d'huile assemblé (50) selon l'une des revendications 1 à 5, **caractérisé en ce que** les cavités (55, 56, 57) annulaires de l'embrayage de coupure (K0), du premier embrayage (E1) et du deuxième embrayage (E2) se succèdent radialement en rapprochement de l'axe (X).

7. Moyeu d'alimentation d'huile assemblé (50) selon l'une des revendications 1 à 6, **caractérisé en ce que** la pièce annulaire rapportée (10) comprend au moins une portée cylindrique intérieure et/ou extérieure pour l'appui d'un joint d'étanchéité de piston d'actionnement (5, 15, 25).

8. Triple embrayage humide (1) pour système de transmission de couple comprenant :
un embrayage de coupure (K0) de type multidisques, commandé pour accoupler sélectivement un arbre menant à une machine électrique,
un premier embrayage (E1) et un deuxième embrayage (E2) respectivement de type multidisques, commandés pour accoupler sélectivement la machine électrique et/ou l'arbre menant à un premier arbre mené et à un deuxième arbre mené,
les premier et deuxième embrayages (E1, E2) étant disposés radialement l'un au-dessus de l'autre,
**caractérisé en ce que** le triple embrayage humide (1) comprend un moyeu d'alimentation d'huile assemblé (50) selon l'une quelconque des revendications précédentes, ledit moyeu d'alimentation d'huile assemblé (50) alimentant en huile les chambres de commande de l'embrayage de coupure (K0), du premier embrayage (E1) et du deuxième embrayage (E2).

9. Triple embrayage humide (1) selon la revendication 8, **caractérisé en ce que** l'ensemble multidisques du premier embrayage (E1) est actionné par un premier organe de transmission de force (16), le premier organe de transmission de force (16) étant une pièce en tôle emboutie en appui sur le piston d'actionnement (15) du premier embrayage (E1).

10. Triple embrayage humide (1) selon la revendication 8 ou 9, **caractérisé en ce que** l'extrémité libre du piston d'actionnement (25) du deuxième embrayage (E2) en appui sur l'ensemble multidisques est disposée radialement entre la première cavité (56) et la deuxième cavité (55) du moyeu d'alimentation d'huile assemblé (50).

## Patentansprüche

1. Zusammengesetzte Ölversorgungsnabe (50) für eine Dreifach-Nasskupplung mit einer zentralen Nabe (51) mit Drehachse (X), wobei die zentrale Nabe (51) umfasst:
einen zylindrischen Abschnitt (52),
einen Flansch (53), der sich radial vom zylindrischen Abschnitt (52) erstreckt,
einen ersten ringförmigen Hohlraum (56), der an der Seite des Flansches angeordnet und zur Aufnahme eines Betätigungskolbens (15) einer ersten Kupplung (E1) ausgebildet ist,
einen zweiten ringförmigen Hohlraum (55), der auf derselben Seite des Flansches wie der erste ringförmige Hohlraum (56) angeordnet und zur Aufnahme eines Betätigungskolbens (25) einer zweiten Kupplung (E2) ausgebildet ist,
einen dritten ringförmigen Hohlraum (57), der radial außerhalb der beiden anderen ringförmigen Hohlräume (55, 56) angeordnet und zur Aufnahme eines Betätigungskolbens (5) einer zusätzlichen Trennkupplung (K0) ausgebildet ist, und mindestens einen Ölzufuhrkanal (54a, 54b, 54c), der in der zentralen Nabe (51) ausgebildet ist, den zylindrischen Abschnitt (52) und/oder den Flansch (53) durchquert und in einen der ringförmigen Hohlräume (55, 56, 57) mündet,
wobei die montierte Ölversorgungsnabe (50) ein angebautes ringförmiges Teil (10, 41, 60) am Flansch der Zentralnabe umfasst, wobei das ringförmige Anbauteil teilweise den ersten ringförmigen Hohlraum (56) und/oder den zweiten ringförmigen Hohlraum (55) bildet,
**dadurch gekennzeichnet, dass** das angebautes ringförmiges Teil (10) ein Scheibenträger der ersten Kupplung (E1) und/oder der zweiten Kupplung (E2) ist,
wobei das freie Ende des angebautes ringförmiges Teil (10) eine Nut aufweist und das andere Ende am Flansch (53) befestigt ist.

2. Zusammengebaute Ölversorgungsnabe (50) nach Anspruch 1, **dadurch gekennzeichnet, dass** sie einen Antriebsdeckel (80) umfasst, der so angeordnet ist, dass er von einer elektrischen Maschine in Drehung versetzt wird, wobei der Antriebsdeckel (80) teilweise den dritten ringförmigen Hohlraum (57) bildet.

3. Zusammengebaute Ölzufuhrnabe (50) nach Anspruch 2, **dadurch gekennzeichnet, dass** der Antriebsdeckel (80) am Außenumfang des Flansches (53) der Zentralnabe (51) angebracht ist.

4. Zusammengebaute Ölversorgungsnabe (50) nach einem der Ansprüche 1 bis 3, **dadurch gekennzeichnet, dass** der zylindrische Abschnitt (52) einen äußeren zylindrischen Sitz aufweist, der teilweise den zweiten ringförmigen Hohlraum (55) der zweiten Kupplung (E2) bildet.

5. Zusammengebaute Ölversorgungsnabe (50) nach einem der Ansprüche 1 bis 4, **dadurch gekennzeichnet, dass** das angebautes ringförmiges Teil (10, 41, 60) durch Schweißen, beispielsweise Laserschweißen, an dem Flansch der Zentralnabe befestigt ist, wobei die Schweißnaht radial oberhalb und/oder unterhalb der Auslassöffnung des in den ringförmigen Hohlraum (55, 56, 57) mündenden Ölzufuhrkanals (54a, 54b, 54c) angeordnet ist.

6. Zusammengebaute Ölzufuhrnabe (50) nach einem der Ansprüche 1 bis 5, **dadurch gekennzeichnet, dass** die ringförmigen Hohlräume (55, 56, 57) der Trennkupplung (K0), der ersten Kupplung (E1) und der zweiten Kupplung (E2) radial in Annäherung an die Achse (X) aufeinanderfolgen.

7. Zusammengebaute Ölversorgungsnabe (50) nach einem der Ansprüche 1 bis 6, **dadurch gekennzeichnet, dass** das angebautes ringförmiges Teil (10) mindestens eine innere und/oder äußere zylindrische Auflagefläche für die Abstützung einer Betätigungskolbendichtung (5, 15, 25) aufweist.

8. Dreifach-Nasskupplung (1) für ein Drehmomentübertragungssystem, umfassend:
eine Lamellentrennkupplung (K0), zum selektiven Koppeln einer Antriebswelle mit einer elektrischen Maschine,
eine erste Kupplung (E1) und eine zweite Kupplung (E2), jeweils vom Mehrscheibentyp, die dazu bestimmt sind, die elektrische Maschine und/oder die Welle, die zu einer ersten angetriebenen Welle führt, selektiv mit einer ersten angetriebenen Welle und einer zweiten angetriebenen Welle zu koppeln,
wobei die erste und die zweite Kupplung (E1, E2) radial übereinander angeordnet sind,
**dadurch gekennzeichnet, dass** die dreifache Nasskupplung (1) eine Ölversorgungsnabe (50) gemäß einem der vorstehenden Ansprüche umfasst, wobei die zusammengesetzte Ölversorgungsnabe (50) die Steuerkammern der Trennkupplung (K0), der ersten Kupplung (E1) und der zweiten Kupplung (E2) mit Öl versorgt.

9. Dreifach-Nasskupplung (1) nach Anspruch 8, **dadurch gekennzeichnet, dass** die Lamellenpakete der ersten Kupplung (E1) durch ein erstes Kraftübertragungselement (16) betätigt werden, wobei das erste Kraftübertragungselement (16) ein Blechteil ist, das auf dem Betätigungskolben (15) der ersten Kupplung (E1) aufliegt.

10. Dreifach-Nasskupplung (1) gemäß Anspruch 8 oder 9, **dadurch gekennzeichnet, dass** das freie Ende des Betätigungskolbens (25) der zweiten Kupplung (E2), der auf der Mehrscheibenbaugruppe aufliegt, radial zwischen dem ersten Hohlraum (56) und dem zweiten Hohlraum (55) der montierten Ölversorgungsnabe (50) angeordnet ist

## Claims

1. An assembled oil supply hub (50) for a triple wet clutch comprising a central hub (51) with axis of rotation (X), said central hub (51) comprising:
a cylindrical portion (52),
a flange (53) extending radially from the cylindrical portion (52),
a first annular cavity (56) positioned on the same side as the flange and arranged to receive an actuating piston (15) for the actuation of a first clutch (E1),
a second annular cavity (55) positioned on the same side of the flange as the first annular cavity (56) and arranged to receive an actuating piston (25) for the actuation of a second clutch (E2),
a third annular cavity (57) arranged radially beyond the other two annular cavities (55, 56) and designed to receive an actuating piston (5) for actuation of an additional torque disconnect clutch (K0), and
at least one oil supply channel (54a, 54b, 54c) formed in the central hub (51) passing through the cylindrical portion (52) and/or the flange (53), and opening into one of the annular cavities (55, 56, 57),
the said assembled oil supply hub (50) comprising an attached annular component (10, 41, 60) attached to the flange of the central hub, said attached annular component partially forming the first annular cavity (56) and/or the second annular cavity (55),
**characterized in that** the attached annular component (10) is an input disk carrier of the first clutch (E1) and/or of the second clutch (E2), the free end of the attached annular component (10) being splined and the other end being fixed to the flange (53).

2. The assembled oil supply hub (50) as claimed in claim 1, **characterized in that** it comprises a drive cover (80) designed to be rotationally driven by an electric machine, the drive cover (80) partly forming the third annular cavity (57).

3. The assembled oil supply hub (50) as claimed in claim 2, **characterized in that** the drive cover (80) is attached to the outer perimeter of the flange (53) of the central hub (51).

4. The assembled oil supply hub (50) as claimed in one of claims 1 to 3, **characterized in that** the cylindrical portion (52) comprises an external cylindrical bearing surface partly forming the second annular cavity (55) of the second clutch (E2).

5. The assembled oil supply hub (50) as claimed in one of claims 1 to 4, **characterized in that** the attached annular component (10, 41, 60) is fixed by welding to the flange of the central hub, for example using laser welding, the welded seam being positioned radially above and/or below the outlet orifice of the oil supply channel (54a, 54b, 54c) opening into the annular cavity (55, 56, 57).

6. The assembled oil supply hub (50) as claimed in one of claims 1 to 5, **characterized in that** the annular cavities (55, 56, 57) of the torque disconnect clutch (K0), of the first clutch (E1) and of the second clutch (E2) succeed one another radially in decreasing distance from the axis (X).

7. The assembled oil supply hub (50) as claimed in one of claims 1 to 6, **characterized in that** the attached annular component (10) comprises at least one interior and/or exterior cylindrical bearing surface against which a seal of actuating piston (5, 15, 25) can bear.

8. A triple wet clutch (1) for a torque-transmission system comprising:
a torque disconnect clutch (K0) of the multidisk type, operated in such a way as to selectively couple a driving shaft to an electric machine,
a first clutch (E1) and a second clutch (E2) that are respectively of the multidisk type and are operated in such a way as to selectively couple the electric machine and/or the driving shaft to a first driven shaft and to a second driven shaft,
the first and second clutches (E1, E2) being positioned radially one above the other, **characterized in that** the triple wet clutch (1) comprises an assembled oil supply hub (50) as claimed in any one of the preceding claims, said assembled oil supply hub (50) supplying oil to the control chambers of the torque disconnect clutch (K0), of the first clutch (E1) and of the second clutch (E2).

9. The triple wet clutch (1) as claimed in claims 8, **characterized in that** the multidisk assembly of the first clutch (E1) is actuated by a first force-transmission member (16), the first force-transmission member (16) being a component made of pressed sheet metal bearing against the actuating piston (15) for actuation of the first clutch (E1).

10. The triple wet clutch (1) as claimed in claim 8 or 9, **characterized in that** the free end of the actuating piston (25) for actuation of the second clutch (E2) bearing against the multidisk assembly is positioned radially between the first cavity (56) and the second cavity (55) of the assembled oil supply hub (50).
